# FASCICULE DE BREVET EUROPEEN

(11) **EP 1 065 506 B1**
(45) Date de publication et mention de la délivrance du brevet: **27.08.2003**
(21) Numéro de dépôt: 00401890.9
(22) Date de dépôt: 30.06.2000
(51) Int. Cl.: G01P 3/44, G01M 19/00

(54) **Dispositif de mesure de paramètres de manoeuvre d'un ouvrant et procédé d'étalonnage de ce dispositif.**
Vorrichtung zum Messen der Parameter beim Öffnen eines Teils und Kalibriermethode für diese Vorrichtung
Device for measuring parameters of opening of an element and calibration method for this device

(30) Priorité: 01.07.1999 FR 9908492
(43) Date de publication de la demande: 03.01.2001
(73) Titulaire: Process Conception Ingenierie S.A., 92190 Meudon (FR)
(72) Inventeur: Blanc, Christophe, 75015 Paris (FR); Chaurang, Frédéric, 92290 Chatenay Malabry (FR); Arlie, Bruno, 91940 Les Ulis (FR); Leclerc, Jean-Michel, 94240 L'Hay les Roses (FR)
(74) Mandataire: Lanceplaine, Jean-Claude

(56) Documents cités:
- EP-A- 0 593 351
- FR-A- 2 760 836
- US-A- 5 627 767

## Description

La présente invention concerne un dispositif de mesure de paramètres de manoeuvre d'un ouvrant et un procédé d'étalonnage de ce dispositif.

L'invention s'applique en particulier à la mesure de paramètres de manoeuvre d'un ouvrant (porte, hayon,...) de véhicule automobile.

Des dispositifs de mesure de paramètres d'un ouvrant sont connus dans l'état de la technique, comme par exemple décrit dans le brevet US 5,627,767.

On connaît également dans l'état de la technique un dispositif de mesure de paramètres de manoeuvre d'un ouvrant, ces paramètres comprenant au moins la vitesse de déplacement de l'ouvrant, dispositif du type comprenant un cordon muni d'une extrémité amont reliée à un organe rotatif d'enroulement du cordon, entraîné par un moteur électrique, et d'une extrémité aval destinée à être reliée à l'ouvrant, le moteur comportant un arbre d'entraînement, couplé à l'organe d'enroulement.

Habituellement, la vitesse de déplacement de l'ouvrant est déduite des impulsions électriques fournies par un codeur couplé au moteur électrique. Le cas échéant, on mesure également à partir du courant d'alimentation du moteur électrique, la force requise pour déplacer l'ouvrant.

La précision de mesure de ces paramètres est malheureusement limitée par le fait qu'ils sont déduits du courant d'alimentation du moteur et du codeur. Par ailleurs, dans les dispositifs de mesure classiques, les possibilités de mémorisation et de traitement des valeurs de ces paramètres au cours de la manoeuvre de l'ouvrant sont généralement limitées.

L'invention a pour but d'augmenter la précision de mesure des paramètres de manoeuvre d'un ouvrant, notamment la vitesse de déplacement de cet ouvrant, ceci en facilitant la mémorisation et le traitement des valeurs des paramètres.

A cet effet, l'invention a pour objet un dispositif de mesure de paramètres de manoeuvre d'un ouvrant, du type précité, caractérisé en ce qu'il comprend un tachymètre de mesure de la vitesse de rotation de l'arbre séparé électriquement du moteur, permettant de déduire la vitesse de déplacement de l'ouvrant à partir de la vitesse de rotation fournie par le tachymètre

Suivant d'autres caractéristiques de ce dispositif :
- le tachymètre est de type magnétique et comporte de préférence un induit solidaire en rotation de l'arbre du moteur et un inducteur fixe ;
- les paramètres à mesurer comprennent de plus la force requise pour le déplacement de l'ouvrant, le dispositif comportant des moyens de mesure de la tension du cordon permettant de déduire la force de déplacement de l'ouvrant à partir de la tension du cordon ;
- les moyens de mesure de la tension du cordon comprennent un capteur d'effort, de préférence de type à jauge de contrainte ;
- l'organe d'enroulement est muni d'une gorge de guidage du cordon s'étendant en hélice autour de l'axe de rotation de cet organe d'enroulement ;
- l'extrémité aval du cordon est munie d'une ventouse d'accrochage sur l'ouvrant ;
- le dispositif de mesure comprend une platine délimitée par deux faces opposées, une première face portant l'organe d'enroulement et la seconde face portant le moteur, le codeur et le tachymètre ;
- l'axe de rotation de l'organe d'enroulement est sensiblement perpendiculaire aux faces de la platine, l'arbre du moteur est sensiblement parallèle aux faces de la platine, et l'arbre du moteur est couplé à l'organe d'enroulement par des moyens de renvoi d'angle et, de préférence, des moyens de réduction ;
- la première face de la platine porte également des moyens de guidage du cordon sensiblement parallèlement à cette première face ;
- les moyens de guidage comprennent une poulie amont destinée à guider le cordon sensiblement tangentiellement à l'organe d'enroulement ;
- les moyens de guidage comprennent de plus une cage aval à rouleaux munie de deux paires croisées de rouleaux de guidage entre lesquelles s'étend le cordon ;
- la platine et les éléments qu'elle porte sont logés dans un boîtier de protection muni de moyens de connexion électrique avec des moyens d'alimentation électrique du dispositif de mesure et des moyens de traitement des paramètres à mesurer ;
- le dispositif comprend un codeur convertissant le déplacement de l'arbre en impulsions électriques, les paramètres à mesurer comprenant de plus une distance de déplacement de l'ouvrant déduite du nombre d'impulsions électriques fournies par le codeur.

L'invention a également pour objet un procédé d'étalonnage d'un dispositif de mesure tel que défini ci-dessus, caractérisé en ce que :
(a) on suspend une masse étalon à l'extrémité aval du cordon, celui-ci étant guidé par une poulie d'étalonnage,
(b) on active le moteur de façon à entraîner le cordon à une vitesse constante à l'encontre du poids de la masse étalon ,
(c) on compare le paramètre étalonné avec un paramètre étalon correspondant, à savoir avec une distance étalon correspondant à la distance étalonnée, une vitesse étalon correspondant à la vitesse étalonnée et une force étalon correspondant à force étalonnée, la distance étalon étant déduite du déplacement de la poulie d'étalonnage, la vitesse étalon étant déduite de la vitesse de rotation de la poulie d'étalonnage, et la force étalon étant égale au poids de la masse étalon,
(d) on calcule un coefficient de correction du paramètre étalonné en fonction de l'écart entre ce paramètre étalonné et le paramètre étalon correspondant.

Suivant une autre caractéristique de ce procédé, on reproduit les étapes (a) à (d) avec au moins deux masses différentes et l'on calcule un coefficient moyen de correction du paramètre étalonné à partir de la moyenne des coefficients de correction de ce paramètre étalonné obtenus pour les différentes masses.

L'invention sera mieux comprise à la lecture de la description qui va suivre donnée uniquement à titre d'exemple et faite en se référant aux dessins dans lesquels :
- la figure 1 est une vue schématique du dessus d'un véhicule automobile muni d'un ouvrant dont des paramètres de manoeuvre sont mesurés par un dispositif selon l'invention ;
- la figure 2 est une vue en perspective du boîtier de protection du dispositif de mesure selon l'invention ;
- les figures 3 et 4 sont des vues en perspective, suivant deux points de vue différents, des principaux moyens du dispositif de mesure selon l'invention logés dans le boîtier représenté sur la figure 2 ;
- la figure 5 est une vue schématique d'un module du dispositif de mesure selon l'invention regroupant le moteur électrique, le tachymètre et le codeur ; et
- la figure 6 est une vue schématique d'une installation d'étalonnage du dispositif de mesure selon l'invention.

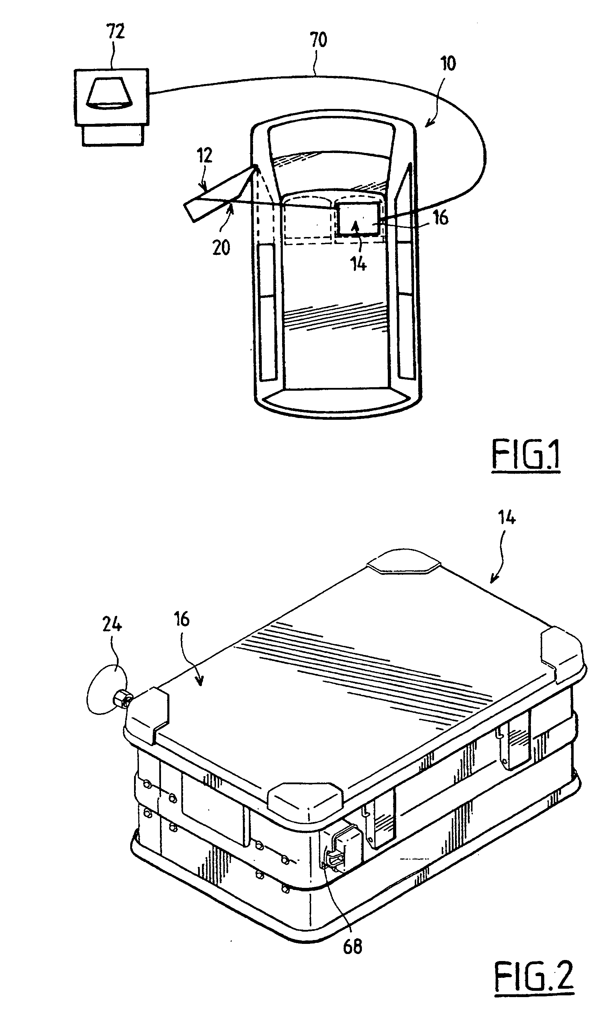

On a représenté schématiquement sur la figure 1 un véhicule automobile 10 muni de portes dont l'une d'elles 12 est en position ouverte. On a également représenté sur cette figure 1 un dispositif 14 selon l'invention pour la mesure de paramètres de manoeuvre d'un ouvrant du véhicule, en particulier la porte 12.

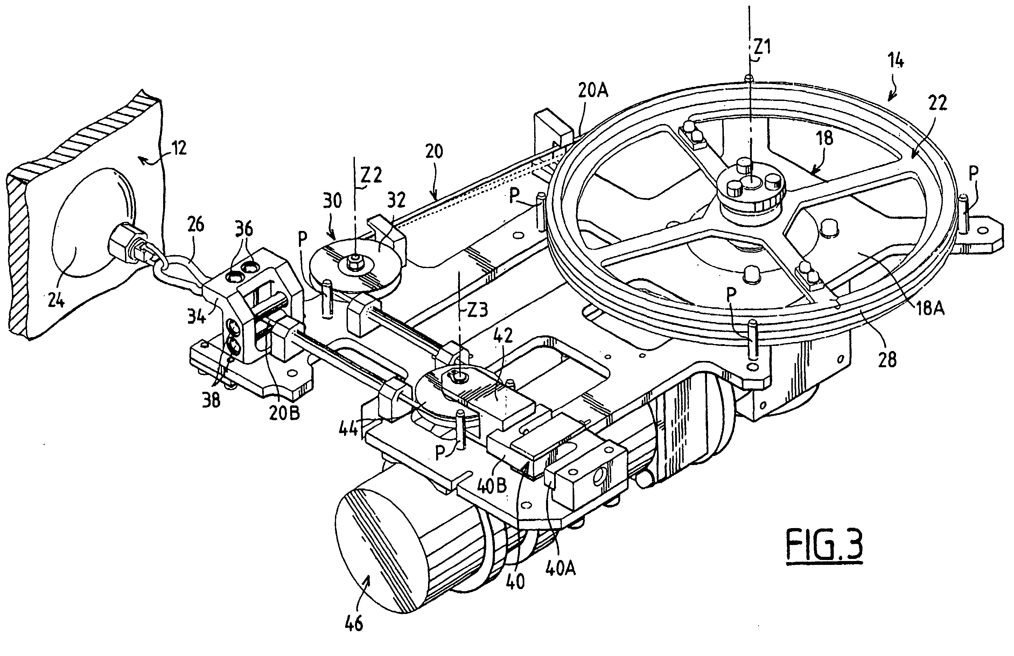

Le dispositif de mesure 14 est représenté plus en détail sur les figures 2 à 4. Ce dispositif de mesure 14 comprend différents moyens illustrés sur les figures 3 à 4 logés dans un boîtier de protection 16, de forme générale prismatique, illustré sur la figure 2.

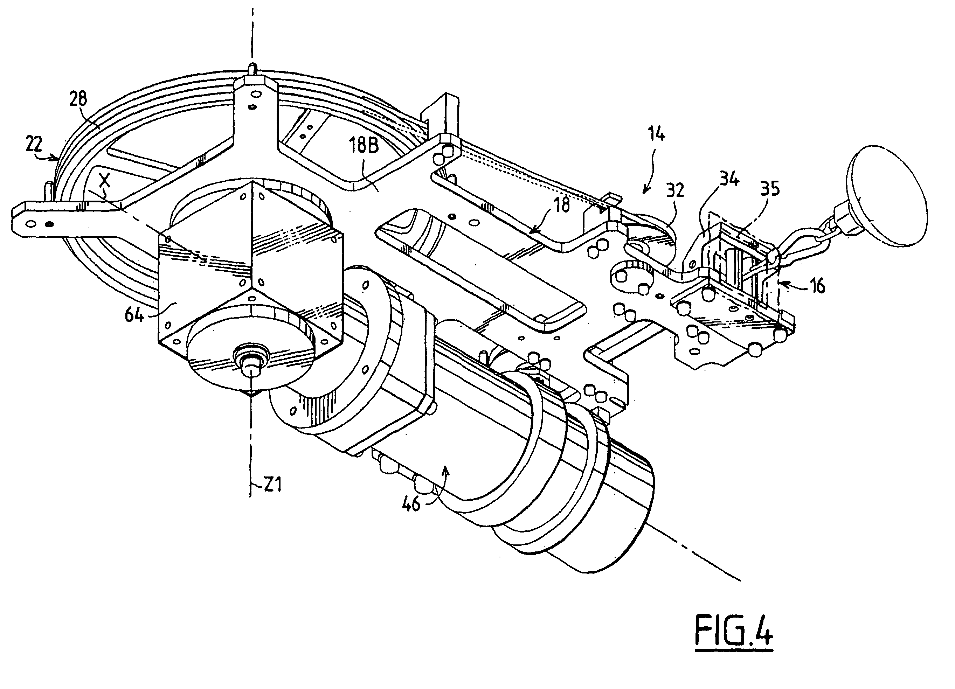

En se référant aux figures 3 et 4, on voit que le dispositif de mesure 14 comprend une platine 18 munie de deux faces opposées supérieure 18A (voir figure 3) et inférieure 18B (voir figure 4). De préférence, la platine 18 est reliée au boîtier 16 par des moyens classiques d'amortissement des chocs éventuels subis par ce boîtier 16.

Le dispositif de mesure 14 comprend également un cordon 20 muni d'une extrémité amont 20A reliée à une roue 22, montée rotative sur la face supérieure 18A de la platine, et d'une extrémité aval 20B destinée à être reliée à un ouvrant tel que la porte 12. L'extrémité aval 20A du cordon est accrochée de façon connue en soi sur le contour périphérique de la roue 22. L'extrémité amont 20B du cordon est reliée à une ventouse 24 d'accrochage sur l'ouvrant, par exemple par l'intermédiaire d'un mousqueton 26. En variante, la ventouse 24 peut être remplacée par un autre moyen d'accrochage classique.

L'axe Z1 de rotation de la roue 22 est sensiblement perpendiculaire à la face supérieure 18A de la platine.

Le contour périphérique de la roue 22 est muni d'une gorge 28 de guidage du cordon 20 s'étendant en hélice autour de l'axe Z1. Cette gorge 28 évite le chevauchement des spires du cordon 20 lorsque celui-ci s'enroule autour de la roue 22. Le diamètre de la roue 22 et la longueur de la gorge 28 sont adaptés pour permettre l'enroulement autour de cette roue 22 d'une longueur du cordon 20 pouvant atteindre, voir dépasser, 2,5 mètres.

Le cordon 20 est guidé sensiblement parallèlement à la face supérieure 18A de la platine à l'aide de moyens 30 portés par cette face supérieure.

Les moyens de guidage 30 comprennent une poulie amont 32 ayant un axe de rotation Z2 sensiblement perpendiculaire à la face supérieure 18A de la platine. Cette poulie amont 32 est destinée à guider le brin du cordon 20 s'étendant entre cette poulie 32 et la roue 22 sensiblement tangentiellement au contour périphérique de cette roue 22. On notera que de façon classique le cordon 20 est logé dans une gorge périphérique de la poulie amont 32.

Les moyens de guidage 30 comprennent également une cage aval 34 à rouleaux. Cette cage 34 est disposée au droit d'une ouverture 35 du boîtier 16 de manière à guider le cordon 20 à travers cette ouverture 35 (voir figure 4).

On notera que la cage 34 comporte deux paires croisées de rouleaux de guidage entre lesquels s'étend le cordon 20. Plus particulièrement, la cage 34 comporte une première paire de rouleaux 36, d'axes sensiblement perpendiculaires à la face supérieure 18A de la platine, et une seconde paire de rouleaux 38, d'axes sensiblement perpendiculaires à ceux de la première paire de rouleaux. Cet agencement des rouleaux 36, 38 permet de guider efficacement le cordon 20 tout en autorisant un angle important entre les brins de ce cordon 20 disposés respectivement à l'intérieur et à l'extérieur du boîtier 16.

La face supérieure 18A de la platine porte également un capteur d'effort 40 (dynamomètre) destiné à mesurer la tension du cordon 20. Ce capteur d'effort 40, de type classique, de préférence de type à jauge de contrainte, comporte une première extrémité 40A solidaire de la platine 18 et une seconde extrémité 40B solidaire d'une chape 42 portant une poulie 44 de renvoi du cordon 20. L'axe Z3 de rotation de cette poulie de renvoi 44 est sensiblement perpendiculaire à la face supérieure 18A de la platine. On notera que de façon classique le cordon 20 est logé dans une gorge périphérique de la poulie de renvoi 44. De préférence, la poulie de renvoi 44 est placée de façon intermédiaire entre la poulie amont 32 et la cages aval 34, ceci en considérant le trajet du cordon 20 dans les moyens de guidage 30.

De façon classique, le capteur d'effort 40 fournit un signal électrique de sortie.

Des pions P sont disposés à la périphérie de la roue 22 et des poulies 32, 44 pour éviter que le cordon 20 ne quitte accidentellement leur gorge de guidage. Ces pions P sont fixés sur la face supérieure 18A de la platine, sensiblement perpendiculairement à cette face 18A.

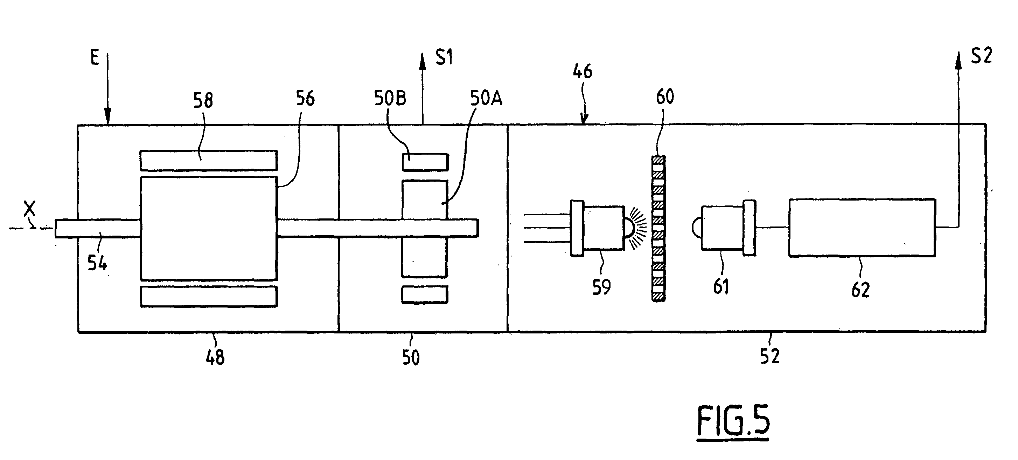

En se référant plus particulièrement aux figures 4 et 5, on voit que la face inférieure 18B de la platine porte un module 46 comportant un moteur électrique 48, un tachymètre 50 et un codeur 52.

Le moteur 48, de type classique, de préférence à courant continu, comprend un arbre d'entraînement rotatif 54, portant un induit 56, et un inducteur fixe 58.

Le tachymètre 50, de type classique, est séparé électriquement du moteur 48 et mesure la vitesse de rotation de l'arbre 54. Le tachymètre 50 est de préférence de type magnétique et comprend un induit 50A solidaire en rotation de l'arbre 54 et un inducteur fixe 50B.

Le codeur 52, de type classique, convertit les déplacements de l'arbre 54 en impulsions électriques. A cet effet, le codeur 52 comprend une source de lumière 59, formant émetteur, un disque 60 à fenêtres transparentes entraîné par l'arbre 54, un récepteur 61 transformant le signal lumineux provenant du disque 60 en signal électrique, et des moyens 62 de mise en forme et d'amplification de ce signal électrique.

On a schématisé sur la figure 5 une entrée E d'alimentation du moteur 48 et deux sorties S1, S2 de signaux électriques fournis respectivement par le tachymètre 50 et le codeur 52.

L'arbre 54 du moteur a un axe X sensiblement parallèle aux faces 18A, 18B de la platine (voir figure 4). L'arbre 54 est couplé à la roue 22 par des moyens classiques comprenant un ensemble 64 à renvoi d'angle et réducteur.

En se référant à la figure 2, on voit que le boîtier 16 comprend un connecteur 68 destiné à raccorder électriquement le capteur d'effort 40 et le module 46 à des moyens d'alimentation électrique et de traitement des paramètres à mesurer. Ainsi, les signaux électriques de sortie du capteur d'effort 40, du tachymètre 50 et du codeur 52 sont transmis, par l'intermédiaire du connecteur 68 et d'un câblage 70, à un ordinateur 72 de type classique (schématisé sur la figure 1), disposé à l'extérieur du boîtier 16. L'ordinateur 72 commande le moteur électrique 48 par l'intermédiaire d'un variateur (non représenté) relié au moteur 48 via le connecteur 68 et le câblage 70.

Dans ce qui suit, on appelle "distance de déplacement de l'ouvrant" tout paramètre permettant de caractériser la position de l'ouvrant par rapport à une position de référence, notamment la position finale de l'ouvrant par rapport à sa position initiale. Cette distance de déplacement peut donc aussi être exprimée sous la forme d'un angle trigonométrique (par exemple en degrés ou radians).

L'ordinateur 72 calcule la distance et la vitesse de déplacement de l'ouvrant auquel est raccordé le cordon 20 à partir, respectivement, du nombre d'impulsions électriques fournies par le codeur 52 et de la vitesse de rotation de l'arbre du moteur fournie par le tachymètre 50. Par ailleurs, l'ordinateur 72 calcule la force requise pour le déplacement de l'ouvrant à partir de la tension du cordon 20 fournie par le capteur 40.

Le cas échéant, l'ordinateur 72 peut enregistrer l'évolution des valeurs des différents paramètres mesurées au cours de la manoeuvre de l'ouvrant.

L'ordinateur 72 peut également piloter le dispositif de mesure 14 de manière à imposer, au cours de la manoeuvre de l'ouvrant, une force ou bien une vitesse de déplacement de l'ouvrant constante.

L'utilisation du dispositif de mesure selon l'invention est très simple. Par exemple, pour mesurer la distance , la vitesse et la force de déplacement de la porte 12 illustrée sur la figure 1, on place le boîtier 16 sur un des sièges du véhicule 10 par exemple le siège opposé à la porte 12. Ce boîtier 16 est immobilisé sur le siège avec des moyens connus. L'extrémité aval du cordon 20 est fixée sur la porte 12 à l'aide de la ventouse 24. Pour mesurer les paramètres de fermeture de la porte 12, cette dernière est placée initialement en position d'ouverture comme cela est représenté sur la figure 1. Puis, le moteur électrique 48 est alimenté de façon à provoquer l'enroulement du cordon 20 autour de la roue 22, ce qui a pour effet d'entraîner la porte 12 vers sa position fermée. Au cours du déplacement de la porte 12, l'ordinateur 72 enregistre les valeurs de la distance, de la vitesse et de la force de déplacement de la porte 12 calculées à partir des trois signaux électriques de sortie fournis par le codeur 52, le tachymètre 50 et le capteur d'effort 40.

Bien entendu, le dispositif 14 selon l'invention permet de mesurer les paramètres de manoeuvre de la porte 12 aussi bien à la fermeture qu'à l'ouverture de cette porte.

Le cas échéant, on peut utiliser deux dispositifs de mesure 14 selon l'invention synchronisés entre eux de manière à mesurer successivement les paramètres d'ouverture puis de fermeture d'une porte de véhicule ou inversement.

Bien entendu, le dispositif selon l'invention peut mesurer les paramètres de manoeuvre d'un ouvrant quelconque qui n'est pas nécessairement un ouvrant de véhicule automobile.

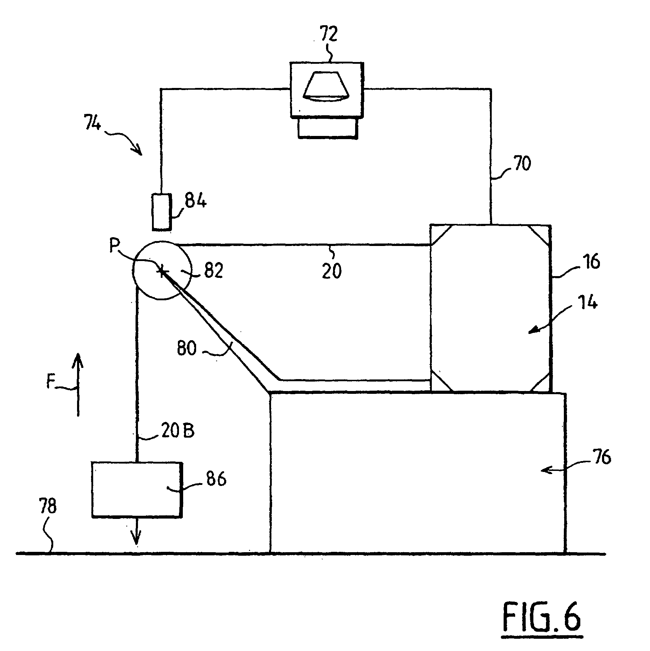

Sur la figure 6, on a représenté schématiquement une installation 74 d'étalonnage du dispositif 14 selon l'invention.

L'installation 74 comporte une embase 76, surélevée par rapport à un sol 78, et un bras 80 portant une poulie d'étalonnage 82.

Le boîtier 16 du dispositif 14 est posé sur l'embase 76. Le bras 80 est relié de façon connue en soi à l'embase 76.

Le diamètre de la poulie d'étalonnage 82 est connu. Les déplacements de la poulie 82 autour de son axe de rotation P sont mesurés au moyen d'un codeur 84 de type classique. Ce codeur 84 convertit les déplacements de la poulie d'étalonnage 82 en impulsions électriques.

Dans ce qui suit, on définit les trois paramètres étalonnés suivants : la distance étalonnée de déplacement de l'ouvrant calculée à partir du nombre d'impulsions électriques fournies par le codeur 52 du dispositif 14, la vitesse étalonnée de l'ouvrant calculée à partir de la vitesse de rotation de l'arbre du moteur 48 fournie par le tachymètre, et la force étalonnée requise pour le déplacement de l'ouvrant fournie par le capteur 40 du dispositif 14.

L'installation 74 permet d'étalonner le dispositif 14, plus particulièrement le codeur 52, le tachymètre 50 et le capteur 40 selon le procédé suivant.

### 1^{ère} ETAPE :

On suspend une masse étalon 86 à l'extrémité 20B du cordon, celui-ci étant guidé par la poulie d'étalonnage 82. Le brin du cordon 20, s'étendant entre la masse d'étalonnage 86 et la poulie d'étalonnage 82, est donc tendu verticalement.

### 2^{ème} ETAPE :

On active le moteur 48 de façon à entraîner le cordon 20 à une vitesse constante à l'encontre du poids de la masse étalon 86. Le cordon 20 se déplace donc dans le sens indiqué par la flèche F sur la figure 6.

### 3^{ème} ETAPE :

On compare au moins un paramètre étalonné avec un paramètre étalon correspondant, à savoir avec une distance étalon pour la distance étalonnée, une vitesse étalon pour la vitesse étalonnée et une force étalon pour la force étalonnée.

La distance étalon est calculée à partir du déplacement de la poulie d'étalonnage 82 qui est déduit du nombre d'impulsions fournies par le codeur 84 et du diamètre de la poulie 82. La vitesse étalon est calculée à partir de la vitesse de rotation de la poulie d'étalonnage 82, cette_vitesse étant déduite du déplacement de la poulie d'étalonnage et de la durée de ce déplacement fournie par une horloge classique de l'ordinateur 72. La force étalon est égale au poids de la masse étalon.

### 4^{ème} ETAPE :

On calcule, au moins pour un paramètre étalonné, un coefficient de correction en fonction de l'écart entre ce paramètre étalonné et le paramètre étalon correspondant.

De préférence, on reproduit les quatre étapes ci-dessus avec au moins deux masses différentes et on calcule pour au moins un paramètre étalonné, un coefficient moyen de correction de ce paramètre étalonné à partir de la moyenne des coefficients de correction de ce paramètre étalonné obtenus pour les différentes masses.

Bien entendu les calculs réalisés lors du procédé d'étalonnage ci-dessus sont réalisés de préférence à l'aide de l'ordinateur 72 auxquels sont raccordés le dispositif 14 et le codeur 84. On notera que le procédé d'étalonnage selon l'invention, mis en oeuvre par l'ordinateur 72, permet d'étalonner en dynamique le codeur 52, le tachymètre 50 et le capteur d'efforts 40 simultanément.

Parmi les avantages de l'invention on notera les suivants.

Le dispositif selon l'invention permet de mesurer des paramètres de manoeuvre d'un ouvrant, notamment la distance, la vitesse et l'effort de déplacement de cet ouvrant, à partir de signaux électriques d'origines différentes provenant d'un codeur, d'un tachymètre, et d'un capteur d'effort, ce qui augmente la fiabilité et la précision de la mesure de ces paramètres.

L'invention permet de traiter les paramètres mesurés dans un ordinateur disposé à l'extérieur du boîtier contenant les moyens mécaniques pour manoeuvrer l'ouvrant. Les paramètres mesurés peuvent être facilement enregistrés et traités par l'ordinateur, ce dernier pouvant également commander les moyens mécaniques de manoeuvre de l'ouvrant en pilotant le moteur électrique.

Les plages de mesure des paramètres de manoeuvre de l'ouvrant peuvent être relativement grandes, les valeurs de ces paramètres pouvant être enregistrées sur toute la course parcourue par l'ouvrant.

Le boîtier du dispositif de mesure selon l'invention protège efficacement ce dernier contre les chocs tout en présentant des avantages esthétiques et ergonomiques. Ce boîtier est par ailleurs facile à fixer à l'intérieur d'un véhicule en vue de mesurer les paramètres de manoeuvre d'un ouvrant de ce véhicule.

Enfin, la roue munie d'une gorge en hélice du dispositif selon l'invention permet l'enroulement d'une longueur relativement importante du cordon tout en évitant les risques de chevauchement des spires de ce cordon autour de la roue.

## Revendications

1. Dispositif (14) de mesure de paramètres de manoeuvre d'un ouvrant (12), ces paramètres comprenant au moins la vitesse de déplacement de l'ouvrant (12), dispositif du type comprenant un cordon (20) muni d'une extrémité amont (20A) reliée à un organe rotatif (22) d'enroulement du cordon, entraîné par un moteur électrique (48), et d'une extrémité aval (20B) destinée à être reliée à l'ouvrant (12), le moteur comportant un arbre d'entraînement (54), couplé à l'organe d'enroulement (22), **caractérisé en ce qu'**il comprend un tachymètre (50) de mesure de la vitesse de rotation de l'arbre (54) séparé électriquement du moteur (48), permettant de déduire la vitesse de déplacement de l'ouvrant (12) à partir de la vitesse de rotation fournie par le tachymètre (50).

2. Dispositif selon la revendication 1, **caractérisé en ce que** le tachymètre (50) est de type magnétique et comporte de préférence un induit (50A) solidaire en rotation de l'arbre du moteur (48) et un inducteur fixe (50B).

3. Dispositif selon la revendication 1 ou 2, **caractérisé en ce que** les paramètres à mesurer comprennent de plus la force requise pour le déplacement de l'ouvrant (12), le dispositif comportant des moyens (40) de mesure de la tension du cordon (20) permettant de déduire la force de déplacement de l'ouvrant (12) à partir de la tension du cordon (20).

4. Dispositif selon l'une quelconque des revendications 1 à 3, **caractérisé en ce que** les moyens (40) de mesure de la tension du cordon comprennent un capteur d'effort, de préférence de type à jauge de contrainte.

5. Dispositif selon l'une quelconque des revendications précédentes, **caractérisé en ce que** l'organe d'enroulement (22) est muni d'une gorge (28) de guidage du cordon (20) s'étendant en hélice autour de l'axe (Z1) de rotation de cet organe d'enroulement (22).

6. Dispositif selon l'une quelconque des revendications précédentes, **caractérisé en ce que** l'extrémité aval (20B) du cordon (20) est munie d'une ventouse (24) d'accrochage sur l'ouvrant (12).

7. Dispositif selon l'une quelconque des revendications précédentes, **caractérisé en ce qu'**il comprend une platine (18) délimitée par deux faces opposées (18A, 18B), une première face (18A) portant l'organe d'enroulement (22) et la seconde face (18B) portant le moteur (48) et le tachymètre (50).

8. Dispositif selon la revendication 7, **caractérisée en ce que** l'axe de rotation (Z1) de l'organe d'enroulement (22) est sensiblement perpendiculaire aux faces (18A, 18B) de la platine, **en ce que** l'arbre (54) du moteur (48) est sensiblement parallèle aux faces (18A, 18B) de la platine, et **en ce que** l'arbre (54) du moteur est couplé à l'organe d'enroulement (22) par des moyens de renvoi d'angle (64) et, de préférence, des moyens de réduction (66).

9. Dispositif selon la revendication 7 ou 8, **caractérisé en ce que** la première face (18A) de la platine porte également des moyens (30) de guidage du cordon (20) sensiblement parallèlement à cette première face (18A).

10. Dispositif selon la revendication 9, **caractérisé en ce que** les moyens de guidage (30) comprennent une poulie amont (32) destinée à guider le cordon (20) sensiblement tangentiellement à l'organe d'enroulement (22).

11. Dispositif selon la revendication 9 ou 10, **caractérisé en ce que** les moyens de guidage (30) comprennent de plus une cage aval (34) à rouleaux munie de deux paires croisées de rouleaux de guidage (36, 38) entre lesquelles s'étend le cordon (20).

12. Dispositif selon les revendications 4, 10 et 11 toutes prises ensemble, **caractérisé en ce que** le capteur d'effort (40) est porté par la première face (18A) de la platine et est relié à une poulie (44) de renvoi du cordon (20), de préférence intermédiaire entre la poulie amont (32) et la cage aval (34) à rouleaux.

13. Dispositif selon l'une quelconque des revendications 7 à 12, **caractérisé en ce que** la platine (18) et les éléments (22, 30, 40, 48, 50) qu'elle porte sont logés dans un boîtier de protection (16) muni de moyens (68) de connexion électrique avec des moyens d'alimentation électrique du dispositif de mesure et des moyens de traitement des paramètres à mesurer.

14. Dispositif selon l'une quelconque des revendications précédentes, **caractérisé en ce qu'**il comprend un codeur (52) convertissant le déplacement de l'arbre (54) en impulsions électriques, les paramètres à mesurer comprenant de plus une distance de déplacement de l'ouvrant (12) déduite du nombre d'impulsions électriques fournies par le codeur (52).

15. Procédé d'étalonnage d'un dispositif, selon les revendications 4 et 14 prises ensemble, pour la mesure d'au moins un paramètre, dit paramètre étalonné, choisi parmi la distance de déplacement de l'ouvrant, la vitesse de déplacement de l'ouvrant et la force requise pour le déplacement de l'ouvrant, **caractérisé en ce que** :
(a) on suspend une masse étalon (86) à l'extrémité aval (20B) du cordon, celui-ci étant guidé par une poulie d'étalonnage (82),
(b) on active le moteur (48) de façon à entraîner le cordon (20) à une vitesse constante à l'encontre du poids de la masse étalon (86),
(c) on compare le paramètre étalonné avec un paramètre étalon correspondant, à savoir avec une distance étalon correspondant à la distance étalonnée, une vitesse étalon correspondant à la vitesse étalonnée et une force étalon correspondant à force étalonnée, la distance étalon étant déduite du déplacement de la poulie d'étalonnage (82), la vitesse étalon étant déduite de la vitesse de rotation de la poulie d'étalonnage (82), et la force étalon étant égale au poids de la masse étalon (86),
(d) on calcule un coefficient de correction du paramètre étalonné en fonction de l'écart entre ce paramètre étalonné et le paramètre étalon correspondant.

16. Procédé selon la revendication 15, **caractérisé en ce que** l'on reproduit les étapes (a) à (d) avec au moins deux masses différentes et l'on calcule un coefficient moyen de correction du paramètre étalonné à partir de la moyenne des coefficients de correction de ce paramètre étalonné obtenus pour les différentes masses.

## Patentansprüche

1. Einrichtung (14) zur Messung von Betriebsparametern eines Verschlusses (12), wobei diese Parameter zumindest die Verfahrgeschwindigkeit des Verschlusses (12) umfassen, mit folgenden Merkmalen: einem Seil (20), dessen oberes Ende (20A) mit einem von einem Elektromotor (48) angetriebenen Drehorgan (22) zum Aufwickeln des Seils verbunden ist und dessen unteres Ende (20B) dazu bestimmt ist, mit dem Verschluss (12) verbunden zu werden, wobei der Motor eine Antriebswelle (54) aufweist, die am Aufwickelorgan (22) angeschlossen ist, **dadurch gekennzeichnet, dass** die Einrichtung einen vom Motor (48) elektrisch getrennten Drehzahlmesser (50) zur Messung der Drehzahl der Welle (54) aufweist, der es ermöglicht, die Verfahrgeschwindigkeit des Verschlusses (12) aus der vom Drehzahlmesser (50) gelieferten Drehzahl herzuleiten.

2. Einrichtung nach Anspruch 1, **dadurch gekennzeichnet, dass** der Drehzahlmesser (50) von magnetischer Bauart ist und vorzugsweise einen drehfest mit der Welle des Motors (48) verbundenen Anker (50A) und einen feststehenden Induktor (50B) umfasst.

3. Einrichtung nach Anspruch 1 oder 2, **dadurch gekennzeichnet, dass** die zu messenden Parameter ferner die zum Bewegen des Verschlusses (12) erforderliche Kraft umfassen, wobei die Einrichtung Mittel (40) zum Messen der Spannung des Seils (20) aufweist, so dass die Kraft zum Bewegen des Verschlusses (12) aus der Spannung des Seils (20) hergeleitet werden kann.

4. Einrichtung nach einem der Ansprüche 1 bis 3, **dadurch gekennzeichnet, dass** die Mittel (40) zum Messen der Spannung des Seils einen Kraftsensor, vorzugsweise mit einem Dehnungsmessstreifen, umfassen.

5. Einrichtung nach einem der vorhergehenden Ansprüche, **dadurch gekennzeichnet, dass** das Aufwickelorgan (22) mit einer Nut (28) zum Führen des Seils (20) versehen ist, die schraubenförmig um die Drehachse (Z1) des Aufwickelorgans (22) verläuft.

6. Einrichtung nach einem der vorhergehenden Ansprüche, **dadurch gekennzeichnet, dass** das untere Ende (20B) des Seils (20) mit einem zur Befestigung am Verschluss (12) dienenden Saugnapf (24) versehen ist.

7. Einrichtung nach einem der vorhergehenden Ansprüche, **dadurch gekennzeichnet, dass** sie eine durch zwei einander gegenüberliegende Flächen (18A, 18B) begrenzte Platte (18) aufweist, wobei eine erste Fläche (18A) das Aufwickelorgan (22) trägt und die zweite Fläche (18B) den Motor (48) und den Drehzahlmesser (50) trägt.

8. Einrichtung nach Anspruch 7, **dadurch gekennzeichnet, dass** die Drehachse (Z1) des Aufwickelorgans (22) im wesentlichen senkrecht zu den Plattenflächen (18A, 18B) steht, die Welle (54) des Motors (48) im wesentlichen parallel zu den Plattenflächen (18A, 18B) liegt und die Welle (54) des Motors mittels einer Winkelumlenkeinrichtung (64) und vorzugsweise mittels einer Untersetzungseinrichtung (66) an dem Aufwickelorgan (22) angeschlossen ist.

9. Einrichtung nach Anspruch 7 oder 8, **dadurch gekennzeichnet, dass** die erste Plattenfläche (18A) ferner Organe (30) trägt, die das Seil (20) im wesentlichen parallel zur ersten Plattenfläche (18A) führen.

10. Einrichtung nach Anspruch 9, **dadurch gekennzeichnet, dass** die Führungsorgane (30) eine obere Seilscheibe (32) aufweisen, die dazu bestimmt ist, das Seil (20) im wesentlichen tangential zum Aufwickelorgan (22) zu führen.

11. Einrichtung nach Anspruch 9 oder 10, **dadurch gekennzeichnet, dass** die Führungsorgane (30) ferner einen unteren Walzenkäfig (34) aufweisen, der mit zwei gekreuzten Paaren von Führungswalzen (36, 38) versehen ist, zwischen denen das Seil (20) verläuft.

12. Einrichtung nach den zusammengenommenen Ansprüchen 4, 10 und 11, **dadurch gekennzeichnet, dass** der Kraftsensor (40) von der ersten Plattenfläche (18A) getragen ist und mit einer Seilscheibe (44) zum Umlenken des Seils (20) verbunden ist, die sich vorzugsweise zwischen der oberen Seilscheibe (32) und dem unteren Walzenkäfig (34) befindet.

13. Einrichtung nach einem der Ansprüche 7 bis 12, **dadurch gekennzeichnet, dass** die Platte (18) und die von ihr getragenen Elemente (22, 30, 40, 48, 50) in einem Schutzgehäuse (16) untergebracht sind, das mit Mitteln (68) zum elektrischen Anschluss einer elektrischen Speiseeinrichtung und zum Anschluss einer Einrichtung zur Verarbeitung der zu messenden Parameter versehen ist.

14. Einrichtung nach einem der vorhergehenden Ansprüche, **dadurch gekennzeichnet, dass** sie einen Codierer (52) aufweist, der die Bewegung der Welle (54) in elektrische Impulse umwandelt, wobei die zu messenden Parameter ferner einen Verfahrweg des Verschlusses (12) umfassen, der aus der Anzahl von elektrischen Impulsen hergeleitet wird, die vom Codierer (52) geliefert werden.

15. Verfahren zum Eichen einer Messeinrichtung nach den zusammengenommenen Ansprüchen 4 und 14 zum Messen wenigstens eines, als geeichter Parameter bezeichneten Parameters, der aus dem Verfahrweg des Verschlusses, der Verfahrgeschwindigkeit des Verschlusses und der zum Verfahren des Verschlusses erforderlichen Kraft ausgewählt ist, **dadurch gekennzeichnet, dass**:
(a) an das untere Ende (20B) des Seils eine Eichmasse (86) gehängt wird, wobei das Seil über eine Eichseilscheibe (82) geführt wird,
(b) der Motor (48) eingeschaltet wird, so dass er gegen das Gewicht der Eichmasse (86) das Seil (20) mit konstanter Geschwindigkeit antreibt,
(c) der geeichte Parameter mit einem zugeordneten Eichparameter verglichen wird, nämlich mit einer der geeichten Strecke zugeordneten Eichstrecke, einer der geeichten Geschwindigkeit zugeordneten Eichgeschwindigkeit und einer der geeichten Kraft zugeordneten Eichkraft, wobei die Eichstrecke aus dem Verfahrweg der Eichseilscheibe (82) hergeleitet wird, die Eichgeschwindigkeit aus der Drehzahl der Eichseilscheibe (82) hergeleitet wird und die Eichkraft gleich dem Gewicht der Eichmasse (86) ist,
(d) für den geeichten Parameter ein Korrekturfaktor in Abhängigkeit von der Abweichung zwischen dem geeichten Parameter und dem zugeordneten Eichparameter berechnet wird.

16. Verfahren nach Anspruch 15, **dadurch gekennzeichnet, dass** die Schritte (a) bis (d) mit wenigstens zwei verschiedenen Massen durchgeführt werden und aus dem Mittelwert der für die verschiedenen Massen gewonnenen Korrekturfaktoren des geeichten Parameters ein mittlerer Korrekturfaktor des geeichten Parameters berechnet wird.

## Claims

1. Device (14) for measurement of operating parameters of a door (12), these parameters comprising at least the speed of movement of the door (12), which device is of the type comprising a cord (20) provided with an upstream end (20A) connected to a rotary component (22) for winding the cord, which is driven by an electric motor (48), and a downstream end (20B) intended to be connected to the door (12), the motor including a drive shaft (54) coupled to the winding component (22), **characterised in that** it comprises a tachometer (50) which is designed for measuring the speed of rotation of the shaft (54) and is electrically isolated from the motor (48), making it possible to deduce the speed of movement of the door (12) on the basis of the speed of rotation delivered by the tachometer (50).

2. Device according to Claim 1, **characterised in that** the tachometer (50) is of the magnetic type and preferably includes an armature (50A) linked in rotation with the shaft of the motor (48) and a fixed inductor (50B).

3. Device according to Claim 1 or 2, **characterised in that** the parameters to be measured furthermore comprise the forced required for moving the door (12), the device including means (40) for measuring the tension of the cord (20), making it possible to deduce the force for moving the door (12) on the basis of the tension of the cord (20).

4. Device according to any one of Claims 1 to 3, **characterised in that** the means (40) for measuring the tension of the cord comprise a force sensor, preferably of the strain gauge type.

5. Device according to any one of the preceding claims, **characterised in that** the winding component (22) is provided with a groove (28) which is designed for guiding the cord (20) and extends in a spiral around the axis (Z1) of rotation of this winding component (22).

6. Device according to any one of the preceding claims, **characterised in that** the downstream end (20B) of the cord (20) is provided with a sucker (24) for attachment to the door (12).

7. Device according to any one of the preceding claims, **characterised in that** it comprises a plate (18) bounded by two opposite faces (18A, 18B), a first face (18A) carrying the winding component (22) and the second face (18B) carrying the motor (48) and the tachometer (50).

8. Device according to Claim 7, **characterised in that** the axis (Z1) of rotation of the winding component (22) is substantially perpendicular to the faces (18A, 18B) of the plate, and **in that** the shaft (54) of the motor (48) is substantially parallel to the faces (18A, 18B) of the plate, and **in that** the shaft (54) of the motor is coupled to the winding component (22) by angle return means (64), and preferably gearing reduction means (66).

9. Device according to Claim 7 or 8, **characterised in that** the first face (18A) of the plate also carries means (30) for guiding the cord (20) substantially parallel to this first face (18A).

10. Device according to Claim 9, **characterised in that** the guide means (30) comprise an upstream pulley (32) intended to guide the cord (20) substantially tangentially to the winding component (22).

11. Device according to Claim 9 or 10, **characterised in that** the guide means (30) furthermore comprise a downstream roller cage (34) provided with two crossed pairs of guide rollers (36, 38), between which the cord (20) extends.

12. Device according to Claims 4, 10 and 11 all taken together, **characterised in that** the force sensor (40) is carried by the first face (18A) of the plate and is connected to a pulley (44) for return of the cord (20), which is preferably intermediate between the upstream pulley (32) and the downstream roller cage (34).

13. Device according to any one of Claims 7 to 12, **characterised in that** the plate (18) and the elements (22, 30, 40, 48, 50) which it carries are accommodated in a protective casing (16) provided with means (68) for electrical connection to the electrical supply means of the measuring device and means for processing the parameters to be measured.

14. Device according to any one of the preceding claims, **characterised in that** it comprises an encoder (52) converting the movement of the shaft (54) into electrical pulses, the parameters to be measured furthermore comprising a movement distance of the door (12), which is deduced from the number of electrical pulses delivered by the encoder (52).

15. Method for calibrating a device according to Claims 4 and 14 taken together, for measuring at least one parameter, referred to as the calibrated parameter, selected from the movement distance of the door, the speed of movement of the door and the force required for moving the door, **characterised in that**
(a) a reference mass (86) is suspended from the downstream end (20B) of the cord, the latter being guided by a calibration pulley (82),
(b) the motor (48) is activated so as to drive the cord (20) at a constant speed against the weight of the reference mass (86),
(c) the calibrated parameter is compared with a corresponding reference parameter, namely with a reference distance corresponding to the calibrated distance, a reference speed corresponding to the calibrated speed and a reference force corresponding to the calibrated force, the reference distance being deduced from the movement of the calibration pulley (82), the reference speed being deduced from the speed of rotation of the calibration pulley (82), and the reference force being equal to the weight of the reference mass (86),
(d) a correction coefficient of the calibrated parameter is calculated as a function of the difference between this calibrated parameter and the corresponding reference parameter.

16. Method according to Claim 15, **characterised in that** steps (a) to (d) are repeated with at least two different masses, and an average correction coefficient of the calibrated parameter is calculated on the basis of the average of the correction coefficients of this calibrated parameter which are obtained for the different masses.
